# EUROPEAN PATENT SPECIFICATION

(11) **EP 4 639 857 B1**
(45) Date of publication and mention of the grant of the patent: **25.11.2026**
(21) Application number: 22840829.0
(22) Date of filing: 23.12.2022
(51) Int. Cl.: H04L 12/18

(54) **METHODS AND APPARATUSES FOR MANAGING A CONFERENCE TO DISTRIBUTE DATA**
VERFAHREN UND VORRICHTUNGEN ZUR VERWALTUNG EINER KONFERENZ ZUR DATENVERTEILUNG
PROCÉDÉS ET APPAREILS DE GESTION D'UNE CONFÉRENCE POUR DISTRIBUER DES DONNÉES

(43) Date of publication of application: 29.10.2025
(73) Proprietor: Telefonaktiebolaget LM Ericsson (publ), 164 83 Stockholm (SE)
(72) Inventor: HOLMBERG, Hans-Christer, 02400 Kirkkonummi (FI); BURMAN, Bo, 194 47 Upplands Väsby (SE); VAN, Trung, 02230 Espoo (FI)
(74) Representative: Ericsson
(86) International application number: PCT/SE2022/051239
(87) International publication number: WO 2024/136713

(56) References cited:
- US-A1- 2008 103 854
- US-A1- 2014 335 839
- US-A1- 2018 234 363

## Description

### Technical Field

Embodiments described herein relate to methods and apparatuses for managing a conference to distribute data.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

A conference is a meeting between two or more conference participants, where data sent by one conference participant is distributed to other conference participants based on the type of data (e.g., audio or video data) and conference policies. A conference is typically managed by a network entity referred to as conference server. There are different ways in which users can join the conference depending on the conference server and the type and policy of the conference. Normally a user will contact the conference server to join a conference. However, there are also cases where the conference server will contact users in order to request them to join the conference.

Traditionally, conferences have been used for audiovisual data (i.e., audio and video). However, a conference can be used to distribute other types of data depending on what type of data is supported by the conference server. There are also different types of meta-data associated with a conference. There can be some human-readable information that describes the conference, and there can be information regarding the number of conference participants, and details about each participant (e.g., whether a participant is willing to send data, receive data, or both).

The entity that creates a conference (i.e., initiates its creation) is referred to as the conference creator or conference initiator, and these terms are used interchangeably herein. The entity can be a user, or a function that creates conferences on behalf of others.

A conference server is a network entity that creates and manages conferences. The conference server is responsible for managing (e.g., authenticating) the conference participants, and for distributing the received conference data (audio, video, etc) among the conference participants, following the policies associated with the conference. Sometimes the conference server distributes data as it is received, and sometimes the conference server performs different types of mixing and switching of the data. For example, in a conference with audio and video data, the conference participants might receive the audio of all other conference participants but might receive the video only from the participant who is currently speaking (referred to as active participant). Sometimes the conference server consists of multiple entities, e.g., one entity that manages the participants and policies of the conference, and another entity that processes and distributes the conference data among the conference participants.

When a conference is created, the conference server typically assigns a unique identifier (referred to as a conference identifier or conference ID) to the conference. Users can then join the conference by contacting the conference server and providing the conference identifier associated with the conference. There are different mechanisms for distributing the conference identifier to users. For example, one user can ask other users to join the conference by sending the conference identifier to them. Alternatively, the conference identifier can be provided to users by another entity.

Voice over Long-Term Evolution (VoLTE) is a profile of voice-over-IP telephony service using mobile cellular network (LTE) access. VoLTE is defined by the Global System for Mobile Communications Association (GSMA), building on a large set of 3rd Generation Partnership Project (3GPP) technical specifications. VoLTE uses Session Initiation Protocol (SIP) to negotiate sessions between endpoints (e.g., devices), and Real-time Transport Protocol (RTP) to transport voice between the session endpoints. VoLTE can be used to conduct conferences.

SIP is a network protocol used to negotiate sessions between endpoints. SIP is not used to carry data between the endpoints but is typically used together with Session Description Protocol (SDP) to exchange the information needed for the endpoints to, for example, establish a Real-time Transport Protocol (RTP) session between themselves. The RTP session will typically be terminated once the associated SIP session is terminated.

Real-time Transport Protocol (RTP) is a protocol for delivering unreliable data. RTP is mostly used for transporting audiovisual data (audio and video) but can also be used to transport non-audiovisual data. Non-audiovisual data could be, for example, data generated by sensors, machines, and other devices, often without human interaction. Devices that generate or consume non-audiovisual data are sometimes referred to as Internet Of Things (IoT) devices, and the data generated as loT data. By default, RTP packets for a single RTP stream are sent on a single 5-tuple. However, different types of multi-path and redundancy mechanisms have been defined for RTP. Real-time Control Protocol (RTCP) is closely linked to RTP, and can be used to, for example, send feedback information from the receiver of RTP packets to the sender of the packets.

Internet of Things (IoT) refers to physical objects that exchange data with other devices or network entities using Internet technologies. Such devices might be anything from small and constrained devices (e.g., different types of sensors) to big machinery. Often, they also contain a software component and a certain level of logic and decision making. Because of this, they are sometimes referred to as smart devices. When IoT is used in industrial environments (factories etc.), it is sometimes referred to as Industrial Internet of Things (IIoT). The number of IoT devices, and the need to transport and distribute loT data between devices and systems has grown rapidly in recent years and is expected to continue growing.

Publish/Subscribe (Pub/Sub) is a data distribution pattern where one endpoint (referred to as the publisher) sends data, and other endpoints (referred to as subscribers) can indicate their interest in receiving the data. The publisher categorises the published data into classes based on the topic and/or the semantic content of the published data. For example, the topic for data carrying temperature sensor data might be "temperature".

The publisher does not have any knowledge of the subscribers or even whether there are any subscribers for a particular class of data. The subscribers indicate one or more classes that are of interest, but do not have any knowledge of what publishers, if any, exist for those classes.

Pub/Sub mechanisms can be either broker-based or broker-less. When using a broker-based mechanism, the publisher sends its data to a dedicated network entity, referred to as the broker. The subscribers inform the broker what data they are interested in receiving using data classification. When the broker receives data associated with a given class, it will forward the data to each subscriber that has indicated interest in receiving (i.e., subscribed to) data associated with that class.

When using a broker-less mechanism, there is no network entity distributing the published data. Instead, the distribution is handled by the network infrastructure. One example of broker-less distribution is IP multicast.

### Summary

Currently defined broker-based Pub/Sub mechanisms require dedicated network infrastructure, and dedicated network protocols. For example, a popular Pub/Sub mechanism is MQ Telemetry Transport (MQTT). MQTT defines a dedicated broker entity, and a protocol that endpoints use to communicate with the broker.

This requirement for dedicated network infrastructure and protocols for Pub/Sub data distribution restricts how Pub/Sub mechanisms can be used. As such, existing conference infrastructures are not used to distribute data using the Pub/Sub pattern.

Certain aspects of this disclosure may provide solutions to these or other challenges.

According to some embodiments there is provided a method performed by a conference server for managing a conference to distribute published data. The method comprises distributing published data to one or more entities that are conference participants of the conference according to a publish-subscribe, Pub/Sub, pattern, wherein a conference identifier assigned to the conference is associated with a first class of the published data.

According to some embodiments there is provided a method performed by a first entity. The method comprises joining a conference that is managed by a conference server based on an association between a conference identifier assigned to the conference and a first class of published data; and receiving or transmitting (502) the published data from or to the conference server according to a publish-subscribe, Pub/Sub, pattern.

According to some embodiments there is provided a method performed by a central server. The method comprising obtaining (901) an indication that a conference identifier for a conference is associated with a first class of published data; and updating (902) a database with the conference identifier and the first class.

According to some embodiments there is provided a conference server for managing a conference to distribute published data. The conference server comprises processing circuitry configured to cause the conference server to: distribute published data to one or more entities that are conference participants of the conference according to a publish-subscribe, Pub/Sub, pattern, wherein a conference identifier assigned to the conference is associated with a first class of the published data.

According to some embodiments there is provided a first entity. The first entity comprises processing circuitry configured to cause the first entity to join a conference that is managed by a conference server based on an association between a conference identifier assigned to the conference and a first class of published data; and receive or transmit the published data from or to the conference server according to a publish-subscribe, Pub/Sub, pattern.

According to some embodiments there is provided a central server. The central server comprises processing circuitry configured to cause the first entity to: obtain an indication that a conference identifier for a conference is associated with a first class of published data; and update a database with the conference identifier and the first class.

Aspects and examples of the present disclosure thus enable Pub/Sub mechanisms to be used without dedicated Pub/Sub network infrastructure. In particular, the present disclosure provides techniques for distributing data among conference participants via a conference server acting as Pub/Sub broker.

The techniques provided herein further enable the distribution of data (e.g. non-audiovisual data) according to a Pub/Sub pattern using an existing conference infrastructure (e.g. a VoLTE infrastructure). In some examples, a device may generate and send both audiovisual video data, using a conference infrastructure, and non-audiovisual loT data, using a pub/sub pattern and the same conference infrastructure.

### Brief Description of the Drawings

For a better understanding of the embodiments of the present disclosure, and to show how it may be put into effect, reference will now be made, by way of example only, to the accompanying drawings, in which:
Figure 1 illustrates a method for the creation of a conference using conference infrastructure;
Figure 2 illustrates the distribution of data among conference participants after a conference has been created;
Figure 3 illustrates a Pub/Sub mechanism implemented on a pub/sub dedicated infrastructure;
Figure 4 illustrates a method according to some embodiments;
Figure 5 illustrates a method performed by a first entity according to some embodiments;
Figure 6 illustrates an example of signalling between a conference server and a first entity by which the first entity requests information about conferences;
Figure 7 illustrates a signalling between a conference server and a first entity by which the first entity requests information about conferences;
Figure 8 illustrates the signalling between a conference creator and a conference server to create a conference according to some embodiments;
Figure 9 illustrates a method performed by a central server according to some embodiments;
Figure 10 illustrates a method of distributing data using conference infrastructure according to a Pub/Sub distribution pattern;
Figure 11 illustrates a conference server comprising processing circuitry (or logic);
Figure 12 illustrates an entity comprising processing circuitry (or logic);
Figure 13 illustrates a central server comprising processing circuitry (or logic);
Figure 14 is a block diagram illustrating a conference server according to some embodiments;
Figure 15 is a block diagram illustrating an entity according to some embodiments;
Figure 16 is a block diagram illustrating a central server according to some embodiments.

### Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general-purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

As described above, aspects of the present disclosure relate to the use of existing conference infrastructure, e.g., VoLTE conference infrastructure, for distributing data between multiple endpoints using a Pub/Sub data distribution pattern. For example, VoLTE currently does not define use of a Pub/Sub mechanism, and therefore the existing VoLTE infrastructure does not support any Pub/Sub mechanisms. More generally, there is no standard definition on how to implement a Pub/Sub mechanism using SIP and RTP.

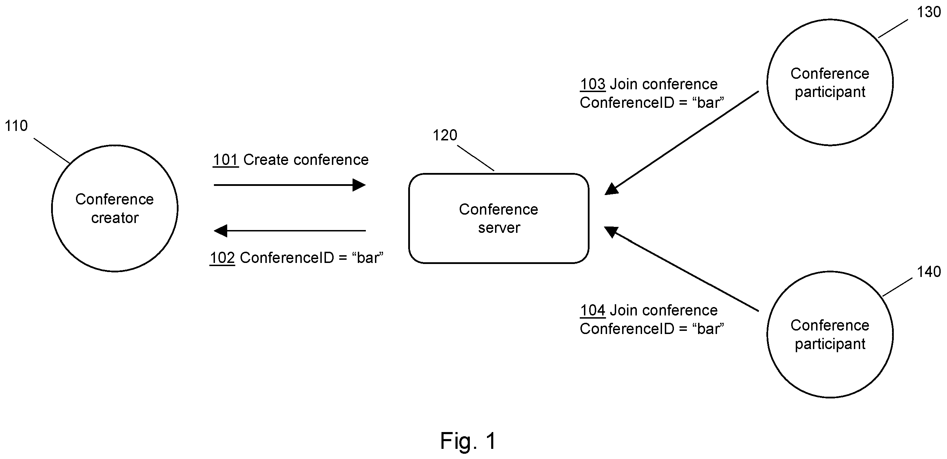

**Figure** 1 illustrates a method for the creation of a conference using conference infrastructure 100.

In this example, a conference infrastructure 100 comprises at least a conference creator 110, a conference server 120 and one or more conference participants 130, 140.

A conference creator (or conference initiator) may comprise any entity that is authorised to create conferences. The conference creator 110 may or may not participate in the conference.

In step 101 of Fig. 1, the conference creator 110 contacts the conference server 120 (an entity responsible for managing conferences) to create a conference. The conference server 120 reserves the data resources (e.g., audio and video mixes) needed for the conference and determines, based on a type of the data resources and/or one or more conference policies, how the conference data is to be distributed among the conference participants.

The conference server 120 then assigns a unique conference identifier to the conference and, in step 102, returns the identifier (conferencelD = "bar") to the conference creator 110. The conference creator 110 may then distribute the conference identifier to invite other users or entities to become conference participants.

To join the conference associated with the identifier "bar", a user or entity may contact the conference server 120 and provide the conference identifier, "bar" in its request to join the conference. In steps 103 and 104 of Fig. 1, conference participants 130 and 140 transmit respective requests to join the conference comprising the identifier "bar".

In some alternative embodiments, the conference server 120 may contact users or entities and invite them to join the conference.

Once a user or entity has joined a conference and thus become a conference participant, the user or entity may send and receive data within the conference. The data is distributed among the conference participants by the conference server according to the data type and the one or more conference policies.

For video, a common conference policy is to distribute the video stream from the participant who is currently speaking ("active speaker"). For audio, a common conference policy is to mix the audio streams from all participants and forward an audio stream with that mix. Another example is where a participant has indicated that it does not want to receive video. In that case the conference server will not forward video to that participant.

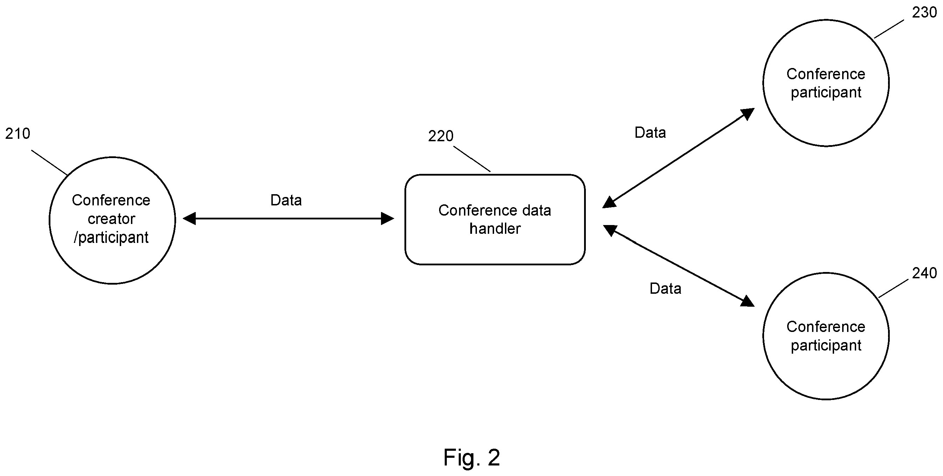

**Figure** 2 illustrates the distribution of data among conference participants after a conference has been created. The conference may have been created according to the method described with reference to Fig. 1.

In this example, the data distribution is handled by a conference data handler 220. The conference data handler 220 may comprise the conference server 120, or it may be a separate entity which is, for example, controlled by the conference server 120. As previously described, the way in which data is distributed among the conference participants 230, 240 may depend on the type of data (e.g., audio or video) and/or one or more conference specific policies.

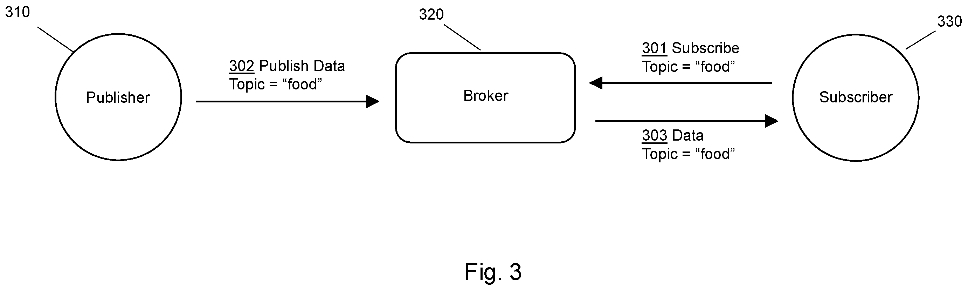

**Figure** 3 illustrates a Pub/Sub mechanism implemented on a pub/sub dedicated infrastructure.

In this example, the Pub/Sub dedicated infrastructure comprises a broker 320 a subscriber 330 and a publisher 310. It will be appreciated that, in some Publish/Subscribe solutions (including the example illustrated in Figure 3), middleware is realised using a dedicated network entity, often referred to as a Publish/Subscribe broker. In other solutions, the broker 320, may be substituted with middleware realised using lower layer network functionality, e.g., multicast groups.

According to a Publish/Subscribe data distribution pattern, a publisher (e.g. an entity acting as one endpoint for the data distribution) sends (or publishes) published data associated with a one or more particular classes. Subscribers (e.g. other endpoints for the data distribution) indicate their interest in receiving data by subscribing to receive data associated with one or more particular classes.

To enact a Pub/Sub mechanism the publisher transmits published data to the broker that distributes the published data to each subscriber subscribing to receive data of a class of the first published data.

In the example illustrated in Figure 3, in step 301, an entity 330 becomes a subscriber by informing the broker 320 that it is interested in receiving data associated with a class "food". In step 302, another entity 310, acting as a publisher, publishes data associated with the class "food" to the broker 320. In step 303, the broker 320 then forwards the published data associated with the class "food" to each subscriber (e.g. subscriber 330) that has subscribed to data associated with the class "food".

The publisher 310 may not know how many (if any) subscribers have subscribed to the "food" class of data. Indeed, publishers and subscribers following the Pub/Sub mechanism may not be aware of each other, and subscribers may not subscribe to data based on the identification of the publisher. Instead, subscribers subscribe to data based on the type of data they want to receive.

By providing the class of data that a subscriber is subscribing too, all of the data published at the broker can effectively be filtered to determine which messages are for reception by which subscribers.

In general, by associating published data with a class the Pub/Sub mechanism can provide filtering in a manner which is, for example, topic-based and/or content-based. It will be appreciated that other types of filtering may be provided by the one or more classes.

For topic-based filtering (as illustrated in Fig. 3), messages are published with an associated topic. For example, a topic could be "food" (as in the example illustrated in Figure 3) "air temperature" or "weather". A subscriber that is interested in data **associated** with the topic can subscribe to that topic. When a publisher sends published data to a broker, it may indicate the topic associated with the data, or the broker may determine or obtain a topic of the published data in some other way. The broker may then distribute the data to each subscriber that has subscribed to the topic associated with the published data.

For content-based filtering, published data may be classified according to the attributes or content of the data. A subscriber can define constraints on the data it wants to receive (e.g. values in some specific range, outside some given range, or exceeding some predefined threshold). This type of filtering may be done by the subscribing entity after having received unfiltered data, but it is possible there's a benefit in limiting the amount of published data (and network traffic) already from the data source or at least limit published data (network traffic) from the conference to the subscriber. Published data may then be distributed to a subscriber if the attributes or content of the published data satisfies those constraints.

In some cases, a mix of both topic-based and content-based filtering can be used. For example, publishers may indicate that published data is associated with a certain topic, while subscribers may register content-based subscriptions associated with one or more topics.

As used herein, "data class" or "class" can refer to published data classified by topic (also referred to as context), content, or a combination of both topic and content.

For example, MQ Telemetry Transport (MQTT) is a Publish/Subscribe protocol that makes use of topic-based filtering. According to the MQTT protocol, a publisher will associate a topic with the published data, and subscribers that are interested in the data will subscribe to that topic. The data distribution is handled by a network entity called an MQTT broker.

Publishers and subscribers that share data with each other may have common knowledge about the classes of published data However, the data classes are not standardised, e.g., there is not a single class library. Different Pub/Sub mechanisms, standard organisations and enterprises may therefore define their own data classes.

According to the disclosure herein, a conference server may be used as a Pub/Sub broker to distribute data among conference participants. A conference participant sending data may comprise a Pub/Sub publisher. A conference participant receiving data may comprise a Pub/Sub subscriber. A conference participant may also comprise both a publisher and a subscriber.

When the conference server (acting as Pub/Sub broker) receives published data from a conference participant associated with a particular class, it will distribute the published data to any of the other conference participants that have subscribed to receive data associated with the particular class.

Each conference may be associated with one or more Pub/Sub data classes, and conference participants may join a conference based on at least one of the one or more data classes with which the conference is associated.

The one or more classes may be assigned to the conference by the conference initiator that initiated the creation of the conference and/or may be determined by the conference server on receipt of the published data.

A conference participant may subscribe to receive published data of a given class. It will be appreciated that a conference participant may subscribe to receive data associated with a first class "or" a second class, in which case it may then receive published data associated with only one of the first class and the second class. In some examples, a subscriber may subscribe to receive published data associated with a first class "and" a second class, in which case, the subscriber may then only receive published data that is associated with both the first class and the second class. For the sake of clarity herein published data is often discussed as being associated with a first class. However, it will be appreciated that published data may be associated with more than one class and that subscriptions may referred to one or more classes in the manner described above.

An entity may join a conference using a conference identifier. It will be appreciated that an entity may comprise any suitable device, for example, a wireless devices, a user equipment, an loT device or a sensor device. Therefore, an entity may need to know which conferences (and thus which conference identifiers) are associated with a given class of data, for example when looking to join a conference to send and/or receive data associated with that class. However, according to existing conference mechanisms, an identifier associated with a conference (e.g., the VoLTE conference identifier) comprises a random string or a numeric or alphanumeric value that does not provide any semantic information about the conference itself.

Therefore, a mechanism may be used to map conference identifiers to their associated one or more Pub/Sub data classes. This mapping enables an entity to determine which conference identifiers represent conferences associated with a specific class. According to some embodiments, the entity seeking a conference may retrieve the mapping between the conference identifiers and their associated one or more Pub/Sub data classes using a protocol mechanism, or by manual configuration. An entity may request information relating to a mapping between one or more Pub/Sub data classes and a conference identifier from a server, such as a conference server or a separate central server.

Thus, according to the techniques disclosed herein, a conference server infrastructure (e.g., a VoLTE infrastructure) may be used to implement distribution of Pub/Sub data (e.g. non-audiovisual data), in addition to conference data (e.g. audiovisual data), using the Pub/Sub data distribution pattern. As such, Pub/Sub data distribution patterns can be more widely implemented. For example, Pub/Sub data distribution patterns can be implemented using VoLTE conference infrastructure, other conference infrastructures that use SIP and/or RTP, and/or any other suitable conference infrastructure.

It will be appreciated that for all embodiments described herein published data may comprise one or more of: audiovisual data, non-audiovisual data, sensor-generated data, machine-generated data, requests, commands (e.g., instructions), and loT data. For example, sensor readings may comprise data from a temperature sensor, pressure sensor, accelerometer, etc. loT data may refer to any data generated by or for an IoT device.

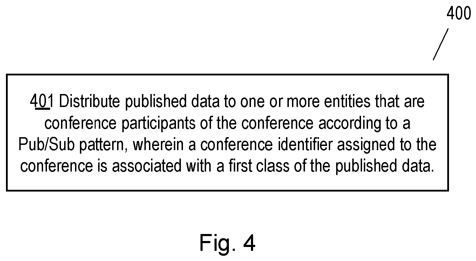

**Figure 4** illustrates a method 400 according to some embodiments. The method 400 is performed by a conference server for managing a conference to distribute published data. According to the disclosure herein, the conference server may act as a Pub/Sub broker for the conference.

The method 400 may be performed by a conference server, which may comprise a physical or virtual node, and may be implemented in a computing device or server apparatus and/or in a virtualized environment, for example in a cloud, edge cloud or fog deployment.

The conference server may be understood as a software program or computer hardware that provides the corresponding functionality. The conference server may be a network node, which may comprise a physical or virtual node, and may be implemented in a computing device or server apparatus and/or in a virtualized environment, for example in a cloud, edge cloud or fog deployment.

In step 401, the conference server distributes published data to one or more entities that are conference participants of the conference according to a Pub/Sub pattern. The distribution of the published data in step 401 may be performed based on conference policies associated with the conference. For Publish/Subscribe, a policy could be to not forward data to participants that have indicated that they only act as publishers (i.e., the only want to send data).

A conference identifier assigned to the conference is associated with a first class of the published data. It will be appreciated that a conference identifier may be associated with more than one class of published data. The method 400 may further comprise a step of assigning the conference identifier to the conference. This step may be performed when the conference is created.

According to some embodiments, the one or more entities are conference participants that have subscribed to receive data of the first class. The one or more entities may be a subset of the total number of conference participants. Some conference participants may only send (publish) data, and do not receive data published by other participants in the conference. The step 401 of distributing published data may be performed responsive to determining that the one or more entities have subscribed to receive data of the first class. It will be appreciated that, in some examples, joining the conference may be considered to amount to a subscription to receive published data associated with the first class.

However, in other examples, the entity joining as a conference participant may send a separate subscription request to the conference server indicating that it is subscribing to receive published data associated with the first class. For example, a conference may be associated with a first class and a second class. In this example, conference participants may be subscribed to receive published data associated with only the first class, only the second class, both the first class and the second class, or neither.

Prior to distributing the published data, the conference server may receive the published data from a publisher. The published data may be received with an indication of the first class (i.e., an indication that the published data comprises data of the first class).

When joining a conference, an entity may subsequently subscribe to and receive information about the conference in a conference event package, e.g., a SIP conference event package. In a SIP conference event package, the <subject> child element may be used to carry a subject string associated with the conference. The subject string in the conference event package may comprise an indication of the first class of data to be published utilising the conference. The example below shows a piece of a SIP conference event package XML body, where the <subject> child element comprises the Publish/Subscribe class ("water-temperature") associated with the conference.

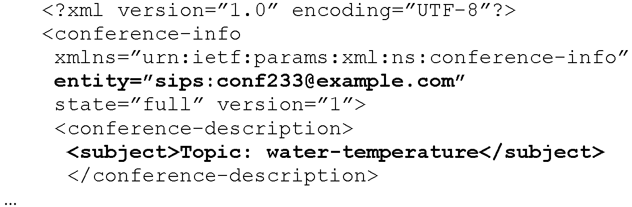

However, before a conference participant can join a conference and subscribe to the conference event package associated with the conference (e.g., the SIP conference event package), there is a need for the candidate conference participant to retrieve the conference identifier(s) associated with a given class of data (e.g., a given topic). There is currently no such mechanism defined for SIP and VoLTE.

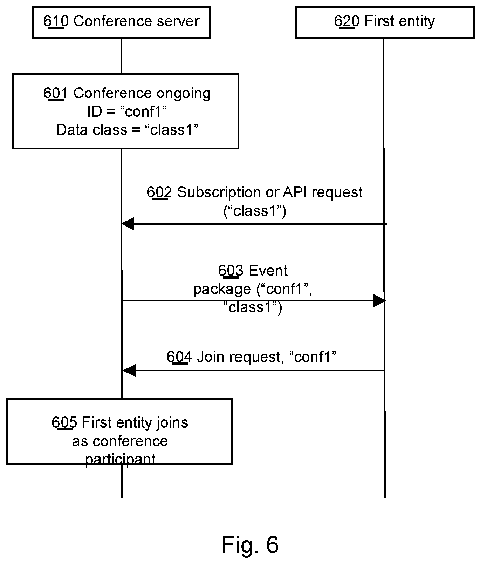

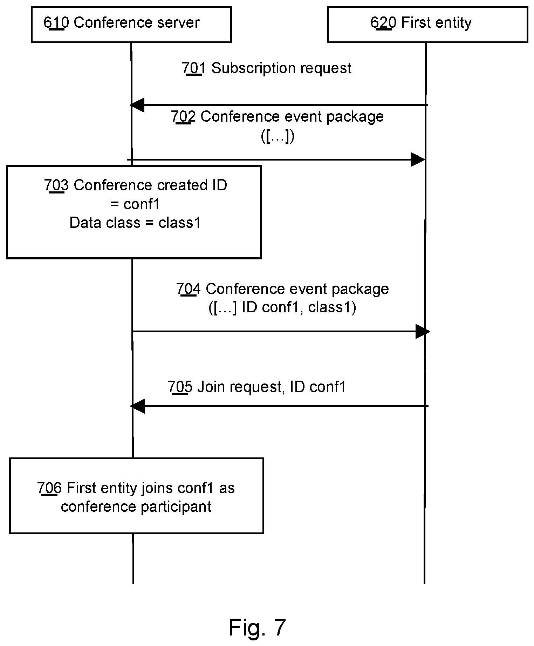

Thus, the method 400 of Fig. 4 may further comprise the conference server receiving, from a first entity, a request for information about conferences. Examples of how the request to receive information about conferences may be implemented are described in more detail with reference to Figures 6 and 7. Responsive to receiving the request, the conference server may send, to the first entity, information about the conference. The information may comprise the conference identifier and an indication of the first class.

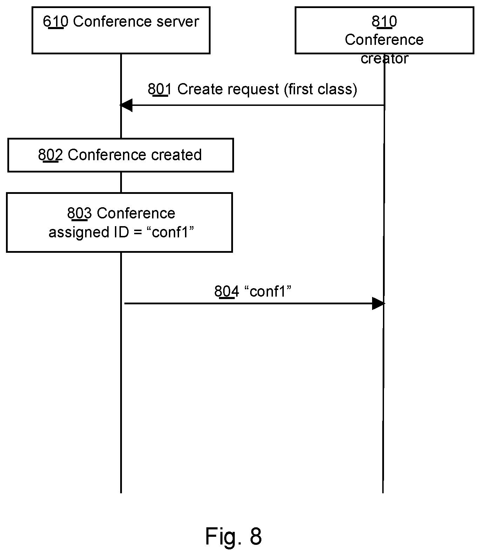

In some embodiments, the method 400 may further comprise, responsive to receiving the request for information about conferences, transmitting an indication that a conference associated with the first class does not exist. If a conference for a given class does not currently exist, a first entity may act as a conference initiator and create a conference for that class (as will be described in more detail below with reference to Figure 8).

Entities may join the conference by sending a request comprising the conference identifier to the conference server. Therefore, the method 400 of Fig. 4 may further comprise a step of receiving, from a second entity, a request to join the conference as a conference participant, the request comprising the conference identifier. After joining the conference as a conference participant, the second entity may subscribe to receive data of the first class. The second entity may be one of the one or more entities to which published data is distributed in step 401. The first entity that acted as conference creator to create the conference may also join the conference in this way. Alternatively, the conference server may invite an entity to join the conference by sending a request comprising the conference identifier. Thus, the method 400 of Fig. 4 may further comprise a step of transmitting, to a third entity, a request for the third entity to join the conference as a conference participant, the request comprising the conference identifier. In some examples, after joining or as part of joining the conference as a conference participant, the third entity may subscribe to receive data of the first class. The third entity may be one of the one or more entities to which published data is subsequently distributed in step 401.

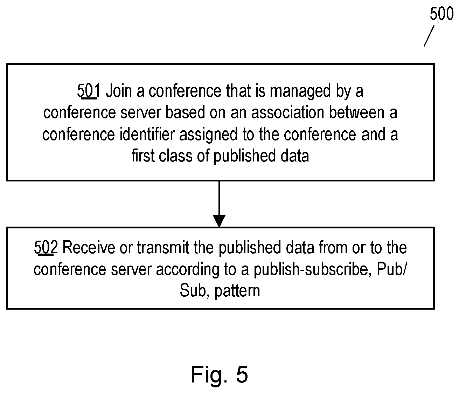

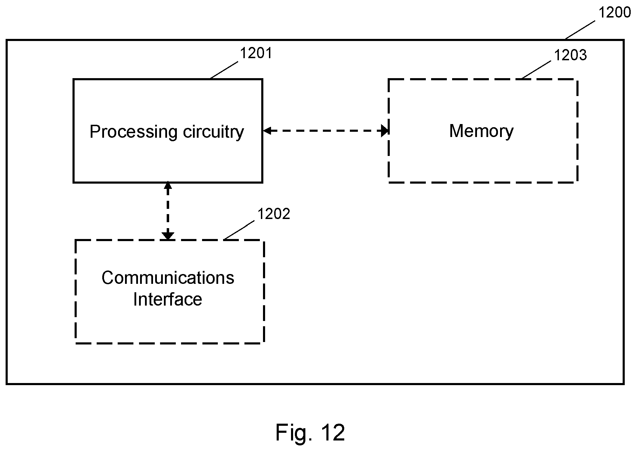

**Figure** 5 illustrates a method 500 performed by a first entity according to some embodiments. The first entity could be, for example, a user equipment, wireless device, IoT device or a sensor device. The first entity may comprise a physical or virtual node, and may be implemented in a computing device or server apparatus and/or in a virtualized environment, for example in a cloud, edge cloud or fog deployment. It will be appreciated that the method of Fig. 5 may be performed by the entity 1200 illustrated in Fig. 12. According to the disclosure herein, the first entity may act as a conference participant of a conference.

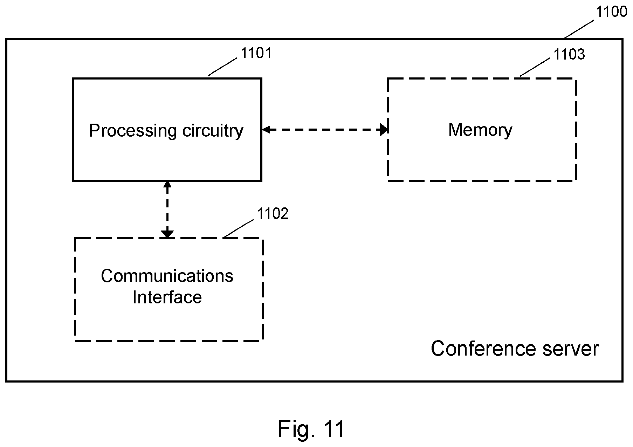

In step 501, the first entity joins a conference that is managed by a conference server, for example, the conference server described with respect to Fig. 11. The conference server may be configured to perform the method 400 of Fig. 4. The first entity joins the conference based on an association between a conference identifier assigned to the conference and a first class of published data. It will be appreciated that the association may indicate that the conference is for distributing data of the first class. In some embodiments, the association may further indicate that the conference is for distributing data of one or more further classes.

The method 500 of Fig. 5 may in some examples further comprise transmitting, to the conference server, a subscription request to receive data of the first class. The subscription request may be sent when the first entity joins the conference or after the first entity joins the conference. In some examples the act of joining the conference may be understood as a subscription request to receive published data of all classes associated with the conference.

In step 502, the first entity receives or transmits the published data from or to the conference server according to a publish-subscribe pattern. Thus, the first entity may receive data that was published by another conference participant. The first entity may also or instead transmit published data of the first class to the conference server such that the conference server may distribute the published data of the first class to any conference participants that have subscribed to receive data of the first class.

The published data may be transmitted with an indication of the first class. For example, the published data may be transmitted with an indication of one or more classes to which the published data belongs.

Prior to joining the conference, the method of 500 of Fig. 5 may further comprise a step of sending, to a server, a request to receive information about conferences. The server may comprise the conference server or a separate central server comprising information relating to conferences being managed by one or more conference servers. The method 500 may further comprise receiving, from the server, information about the conference. The information may comprise the conference identifier and the first class. Examples of how the request to receive information about conferences may be implemented are described in more detail with reference to Figures 6 and 7.

In some examples, after sending the request to receive information about conferences, the method 500 may further comprise receiving an indication that a conference associated with the first class does not exist or determining that a conference associated with the first class does not exist. In response to this indication or determination, the first entity may request to create a conference associated with the first class, as will be described with more detail with reference to Figure 8.

Prior to joining the conference, the method 500 of Fig. 5 may further comprise, transmitting, to the conference server, a request to join the conference as a conference participant. The request to join the conference may comprise the conference identifier. Alternatively, prior to joining the conference, the method 500 may comprise receiving, from the conference server, a request for the first entity to join the conference as a conference participant, the request comprising the conference identifier.

**Figure** 6 illustrates an example of signalling between a conference server 610 and a first entity 620 by which the first entity 620 requests information about conferences. The conference server 610 is configured to perform the method as described with reference to Figure 4. The first entity is configured to perform the method as described with reference to Figure 5.

In the example illustrated in Figure 6 a conference is ongoing (601). The conference is managed by the conference server 610. The conference has an associated conference ID, "conf1", and is associated with a data class, "class1".

In step 602, a first entity transmits, to the conference server, a request for information about conferences associated with the data class, "class1". The request in step 602 may comprise a subscription request to subscribe to updates about any conferences for data of the class, "class1". In some embodiments, the request transmitted in step 602 comprises subscription request to receive information about any conferences associated with any of one or more classes comprising the first class.

Alternatively, the request may comprise a request to receive an indication of any ongoing conference associated with the any of one or more classes of published data comprising the first class e.g. "class1". For example, an indication of conferences associated with the first class that are ongoing when the request is received. The request may comprise an API request.

In step 603, the conference server, responsive to receiving the request in step 602, transmits information relating to one or more conference(s) associated with the data class, "class1". In other words, as the conference exists upon receipt of the request (either subscription request or general request (e.g. API request), the step of sending the information about the conference may be performed responsive to receipt of the request.

The information about the conference may be comprised in an event package. The event package may comprise conference identifier "conf1" and an indication of the class of data e.g. "class1". In some embodiments, the event package comprises an indication of the data class, which may be the data class "class1". The event package may comprise further conference identifiers and their corresponding data classes.

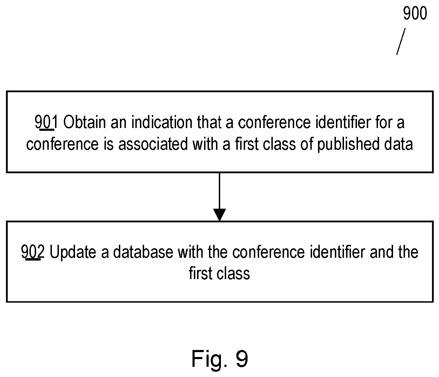

The conference server may obtain the information relating to conferences from a database stored by the conference server. Alternatively, the information may be obtained from a central server (as will be described in more detail below with reference to Figure 9)
According to some embodiments, the information about the conference may be transmitted to the first entity in step 603 as part of a new type of event package. This new event package may be referred to as a SIP Publish/Subscribe event package. The SIP Pub/Sub event package may comprise information about one or more existing conferences, where the information comprises (i) the conference identifier for each of the one or more conferences, and (ii) an indication of one or more classes associated with each of the one or more conferences.

The first entity may therefore search for the class (e.g. "class1") it is interested in within a SIP Pub/Sub event package and may join the associated conference(s) using the relevant conference identifier.

In some examples therefore step 602 may comprise the first entity that is interested in joining Publish/Subscribe conferences subscribing to receive the SIP Pub/Sub event package, and, in particular, to receive information about existing (i.e., ongoing) conferences either of a specified set of classes, or of all classes.

In this example illustrated in Figure 6, the event package transmitted to the first entity 620 in step 603 does comprise information relating to the conference(s) associated with the data class, "class1" and therefore the first entity 620 is able to perform step 604.

In step 604, the first entity sends, to the conference server, a request to join the conference as a conference participant. The request comprises the conference identifier, "conf1" which is received in step 603. In step 605, the first entity joins the conference as a conference participant. Step 605 comprises an example implementation of step 501 of Figure 5.

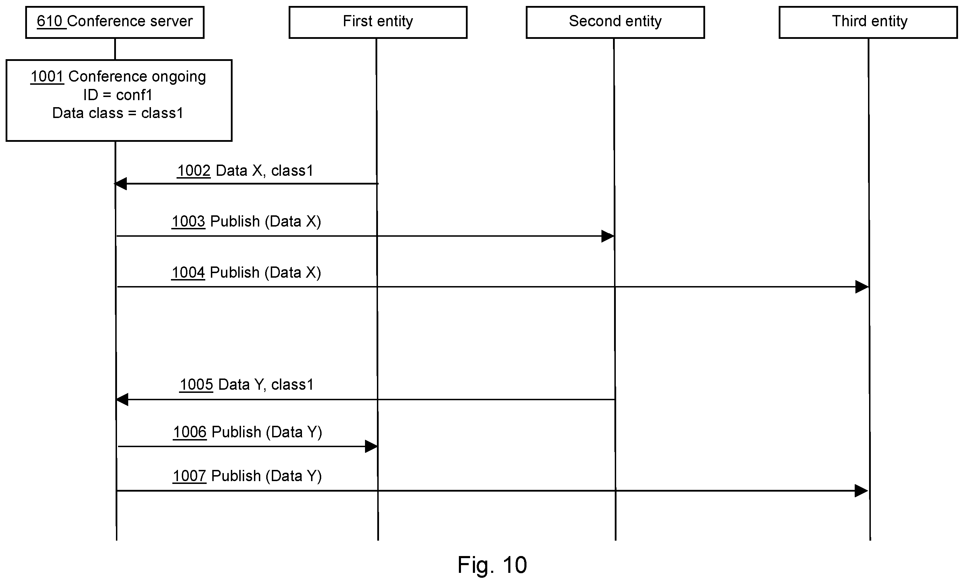

In some embodiments, the first entity may then transmit, to the conference server, a subscription request to receive published data of the first class, the subscription request comprising an indication of data of the first class, "class1". The distribution of published data of the first class will be described in more detail with reference to Figure 10.

**Figure** 7 illustrates a signalling between a conference server 610 and a first entity 620 by which the first entity 620 requests information about conferences. The conference server 610 is configured to perform the method as described with reference to Figure 4. The first entity 620 is configured to perform the method as described with reference to Figure 5.

In the example illustrated in Figure 7, at step 701 there is no ongoing conference that is associated with the class "class1".

In step 701, the first entity 620 transmits, to the conference server 610, a subscription request to subscribe to updates about any conferences for all classes. However, unlike in the method of Fig. 6, there are no ongoing conferences for data of class, "class1".

In step 702, as the first entity 620 has subscribed to receive updates about any conferences, the conference server 610 transmits information relating to any ongoing conferences and their associated classes to the first entity 620. This information may be comprised in a SIP Pub/Sub event package as described above. In this example, the information transmitted in step 702 will contain no information regarding any ongoing conferences associated with the class "class1".

Subsequently, in step 703, a conference is created for data of class, "class1". The newly created conference has conference identifier, "conf1".

In step 704, the conference server, responsive to the creation of the conference, transmits an updated event package to the first entity 620. The event package in this step comprises the conference identifier "conf1" and the data class "class1".

By transmitting a subscription request as described with reference to Figure 7, the first entity 620 avoids having to repeatedly request for information relating to any ongoing conferences associated with the class "class1", and excessive signalling is avoided.

In step 705, the conference server 610 receives, from the first entity, a request to join the conference as a conference participant. The request comprises the conference identifier, "conf1". In step 706, the first entity 620 joins as a conference participant. Step 706 comprises an example implementation of step 501 of Figure 5.

In some embodiments, the first entity 620 may then transmit, to the conference server, a subscription request to receive published data of the first class, the subscription request comprising an indication of data of the first class, "class1". The distribution of published data of the first class will be described in more detail with reference to Figure 10.

It will be appreciated that in some examples, when requests such as the requests described in steps 602 and 701 of Figures 6 and 7 are transmitted, the first entity 620 may determine or receive an indication that no conference is ongoing that is associated with the class "class1",

For example, the first entity may be interested in receiving or publishing data relating to the class "class1" but may not have been able to obtain information indicating that a conference relating to the class "class1" exists. In some examples, the conference server 610 may directly indicate to the first entity 620 that a conference for the "class1" does not exist. Alternatively, the first entity 620 may deduce that there are no such conferences based on an absence of an indication that a conference for the class "class1" does exist. For example, the conference creator may have subscribed to receive a SIP Pub/Sub event package (as described above), and the latest received SIP Pub/Sub event package may comprise no information regarding a conference associated with the class first class.

In these examples, the first entity may opt to perform the role of a conference creator as described with reference to Figure 8.

**Figure** 8 illustrates the signalling between a conference creator 810 and a conference server 610 to create a conference according to some embodiments.

The conference server 610 may be configured to perform the method of Figure 4. The conference creator 810 may be configured to perform the method of Figure 5.

The method of Fig. 7 could be implemented for VoLTE (e.g., using the conference service, VoLTE conference).

In step 801, the conference creator 810 transmits request to create a conference to a conference server 610 (create request). In some embodiments, the create request comprises a SIP INVITE request to create a VoLTE conference. The conference server 610 may comprise an Application Server (AS) acting as a Media Resource Function Control (MRFC). The SIP INVITE request may be sent using a dedicated request Uniform Resource Identifier (URI) (e.g., a conference factory URI) associated with the AS/MRFC.

The step of transmitting the request to create the conference may be performed responsive to the conference creator determining that a conference associated with a first class does not exist. In some examples, after transmitting the subscription request (e.g. as described in in step 701 of Figure 7) and receiving the event package containing no indication of a conference for "class1" (e.g. as described in step 702 of Figure 7), the first entity 620 may wait a predetermined period in which no updated event package comprising information relating to a conference for "class1" is received before opting to request to create a conference for the "class1".

In step 802, the conference server 610 creates the conference. For example, the AS/MRFC may reserve the media resources needed for the conference from a Media Resource Function Processor (MRFP). Once this is done, data/media can flow between the conference creator and the MRFP.

In step 803, in this example, the conference server 610 assigns a conference identifier (labelled "conf1") to the conference. For example, the AS/MRFC may create a URI (conference URI) associated with the conference. It will be appreciated that in some examples, the conference identifier may be determined by another entity other than the conference server (for example a central server).

In step 804, the conference server 610 transmits the conference identifier to the conference creator 810. For example, the AS/MRFC may provide the conference URI to the conference initiator in a response to the SIP INVITE request. VoLTE does not reference a mechanism for a conference creator 810 to provide the <subject> of the conference. In some embodiments, the conference creator 810 provides the subject of the conference using the Centralised Conferencing Manipulation Protocol (CCMP).

The conference creator 810 may in some examples invite other participants to the conference. The conference creator 810 may do so by sending a SIP REFER request to each participant that it wants to invite to the conference. The SIP REFER request may comprise the conference URI that was created by the AS/MRFC, and a participant can then join the conference by sending a SIP INVITE request to the AS/MRFC using the conference URI. Once the participant has joined the conference, media can flow between the participant and the MRFP.

Alternatively, or in addition, conference participants may the request to join the conference for example as described with reference to Figs. 6 and 7.

During the conference, the MRFP may receive and distribute data and/or media among the conference participants, based on the conference policies associated with the conference. In VoLTE, audio and video media is transported using the Real-time Transport Protocol.

A conference event package can be used to provide information about the conference. For example, VoLTE conferences use the SIP conference event package. The conference event package may comprise meta-data associated with the conference. For example, the conference event package may comprise a <subject> field that can be used to indicate the subject of the conference or the class associated with the conference. conference participants may subscribe to the conference event package to receive meta-data information and updates about the conference, e.g., the number of current participants within the conference. The SIP NOTIFY request may be used to send data associated with the event package.

As described above, in some examples a central server may be used to store information relating to conferences being managed by one or more conference servers.

**Figure** 9 illustrates a method 900 performed by a central server according to some embodiments.

The central server may be understood as a software program or computer hardware that provides the corresponding functionality. The central server may be a network node, which may comprise a physical or virtual node, and may be implemented in a computing device or server apparatus and/or in a virtualized environment, for example in a cloud, edge cloud or fog deployment.

The method 900 comprises a step 901 of obtaining an indication that a conference identifier for a conference is associated with a first class of published data.

The method 900 further comprises a step 902 of updating a database with the conference identifier and the first class. The database may be stored by the central server or otherwise accessible to the central server for retrieving information stored therein.

The central server may receive, from a first entity, a request to receive information about conferences associated with the first class. The first entity may be an entity configured to perform the method described with respect to Fig. 5. The method may further comprise sending, to the first entity, information about the conference. The sent information may comprise the conference identifier and the first class. The information may be comprised in an event package, e.g., a new type of event package (SIP Pub/Sub event package). The event package may comprise information about one or more conferences associated with one or more classes comprising the first class.

In some embodiments, the request to receive information about conferences comprises a subscription request to receive information about any conferences associated with any of one or more classes comprising the first class. The step of sending the information about the conference to the first entity may be performed responsive to obtaining the indication that the conference identifier for the conference is associated with the first class of published data. Alternatively, if the database comprises the conference identifier and the first class upon receipt of the subscription request, the step of sending the information may be performed responsive to receipt of the subscription request

In alternative embodiments, the request to receive information about conferences comprises a request to receive an indication of any ongoing conference associated with the first class, e.g., an indication of conferences associated with the first class that are ongoing when the request is received. The request may comprise an API request.

The method 900 of Fig. 9 may further comprise a step of updating the database with a conference server identifier for a conference server that is managing the conference. The conference server may be configured to perform the method 400 of Fig. 4.

**Figure** 10 illustrates a method of distributing data using conference infrastructure according to a Pub/Sub distribution pattern. Figure 10 illustrates an example implementation of the methods of Figures 4 and 5.

In step 1001, a conference is ongoing with conference identifier, "conf1", and data class, "class1". A conference server 710 is managing a conference to distribute published data. A first, second and third entity are conference participants that have subscribed to receive data of a first class, "class1".

In step 1002, the first entity transmits published data "Data X" to the conference server and indicates that the data is of class "class1". The conference server transmits the published data it receives to all conference participants that have subscribed to receive data of a first class, "class1". Thus, in steps 1003 and 1004, the conference server transmits (publishes) Data X to the second and third entity. Steps 1003 and 1004 may be in a single broadcast. Alternatively, steps 1003 and 1004 may comprise separate transmissions. Steps 1003 and 1004 comprise an example implementation of step 401 of Figure 4 and step 502 of Figure 5. Step 1002 also comprises an example implementation of step 502 of Figure 5.

In step 1005, the second entity transmits published data "Data Y" to the conference server and indicates that the data is of class "class1". The conference server transmits the published data it receives to all conference participants that have subscribed to receive data of a first class, "class1". Thus, in steps 1006 and 1007, the conference server transmits (publishes) Data Y to the first and third entity. Steps 1006 and 1007 may be a single broadcast. Alternatively, steps 1006 and 1007 may comprise separate transmissions. Steps 1006 and 1007 comprise an example implementation of step 401 of Figure 4 and step 502 of Figure 5. Step 1005 also comprises an example implementation of step 502 of Figure 5.

**Figure 11** illustrates a conference server 1100 comprising processing circuitry (or logic) 1101. The processing circuitry 1101 controls the operation of the conference server 1100 and can implement the method described herein in relation to a conference server 1100. The processing circuitry 1101 can comprise one or more processors, processing units, multi-core processors or modules that are configured or programmed to control the conference server 1100 in the manner described herein. In particular implementations, the processing circuitry 1101 can comprise a plurality of software and/or hardware modules that are each configured to perform, or are for performing, individual or multiple steps of the method described herein in relation to the conference server 1100. It will be appreciated that the conference server 1100 may comprise one or more virtual machines running different software and/or processes. The conference server 1100 may therefore comprise, or be implemented in or as one or more servers, switches and/or storage devices and/or may comprise cloud computing infrastructure that runs the software and/or processes.

Briefly, the processing circuitry 1101 of the conference server 1100 is configured to perform the method as described with reference to Figure 4, and/or the method performed by the conference server 610 in Figures 6, 7, 8 and 10.

In some embodiments, the conference server 1100 may optionally comprise a communications interface 1102. The communications interface 1102 of the conference server 1100 can be for use in communicating with other nodes, such as other virtual nodes. For example, the communications interface 1102 of the conference server 1100 can be configured to transmit to and/or receive from other nodes requests, resources, information, data, signals, or similar. The processing circuitry 1101 of conference server 1100 may be configured to control the communications interface 1102 of the conference server 1100 to transmit to and/or receive from other nodes requests, resources, information, data, signals, or similar. The communications interface 1102 can use any suitable communication technology.

Optionally, the conference server 1100 may comprise a memory 1103. In some embodiments, the memory 1103 of the conference server 1100 can be configured to store program code that can be executed by the processing circuitry 1101 of the conference server 1100 to perform the method described herein in relation to the conference server 1100. Alternatively or in addition, the memory 1103 of the conference server 1100, can be configured to store any requests, resources, information, data, signals, or similar that are described herein. The processing circuitry 1101 of the conference server 1100 may be configured to control the memory 1103 of the conference server 1100 to store any requests, resources, information, data, signals, or similar that are described herein. The conference server 1100 may be configured operate in the manner described herein in respect of an conference server.

**Figure 12** illustrates an entity 1200 comprising processing circuitry (or logic) 1201. The processing circuitry 1201 controls the operation of the entity 1200 and can implement the method described herein in relation to an entity 1200. The processing circuitry 1201 can comprise one or more processors, processing units, multi-core processors or modules that are configured or programmed to control the entity 1200 in the manner described herein. In particular implementations, the processing circuitry 1201 can comprise a plurality of software and/or hardware modules that are each configured to perform, or are for performing, individual or multiple steps of the method described herein in relation to the entity 1200. It will be appreciated that the entity 1200 may comprise one or more virtual machines running different software and/or processes. The entity 1200 may therefore comprise, or be implemented in or as one or more servers, switches and/or storage devices and/or may comprise cloud computing infrastructure that runs the software and/or processes.

Briefly, the processing circuitry 1201 of the entity 1200 is configured to perform the method of Figure 5, or the method performed by the first entity 620 in Figures 6 or 7, and/or the method performed by the conference creator 810 in Figure 8, and/or the method performed by any one of the first, second or third entity in Figure 10.

In some embodiments, the entity 1200 may optionally comprise a communications interface 1202. The communications interface 1202 of the entity 1200 can be for use in communicating with other nodes, such as other virtual nodes. For example, the communications interface 1202 of the entity 1200 can be configured to transmit to and/or receive from other nodes requests, resources, information, data, signals, or similar. The processing circuitry 1201 of entity 1200 may be configured to control the communications interface 1202 of the entity 1200 to transmit to and/or receive from other nodes requests, resources, information, data, signals, or similar. The communications interface 1202 can use any suitable communication technology.

Optionally, the entity 1200 may comprise a memory 1203. In some embodiments, the memory 1203 of the entity 1200 can be configured to store program code that can be executed by the processing circuitry 1201 of the entity 1200 to perform the method described herein in relation to the entity 1200. Alternatively or in addition, the memory 1203 of the entity 1200, can be configured to store any requests, resources, information, data, signals, or similar that are described herein. The processing circuitry 1201 of the entity 1200 may be configured to control the memory 1203 of the entity 1200 to store any requests, resources, information, data, signals, or similar that are described herein. The entity 1200 may be configured operate in the manner described herein in respect of an entity.

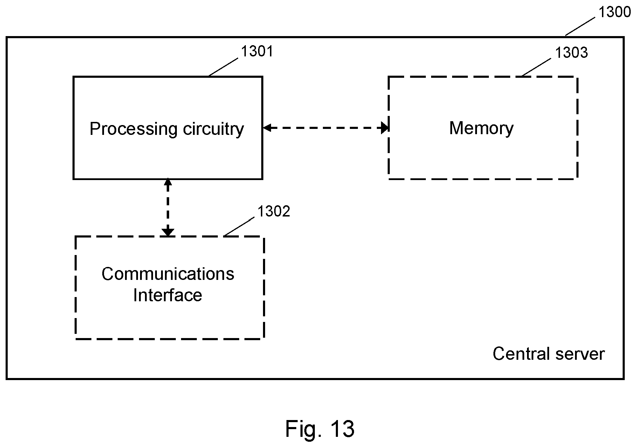

**Figure 13** illustrates a central server 1300 comprising processing circuitry (or logic) 1301. The processing circuitry 1301 controls the operation of the central server 1300 and can implement the method described herein in relation to a central server 1300. The processing circuitry 1301 can comprise one or more processors, processing units, multi-core processors or modules that are configured or programmed to control the central server 1300 in the manner described herein. In particular implementations, the processing circuitry 1301 can comprise a plurality of software and/or hardware modules that are each configured to perform, or are for performing, individual or multiple steps of the method described herein in relation to the central server 1300. It will be appreciated that the central server 1300 may comprise one or more virtual machines running different software and/or processes. The central server 1300 may therefore comprise, or be implemented in or as one or more servers, switches and/or storage devices and/or may comprise cloud computing infrastructure that runs the software and/or processes.

Briefly, the processing circuitry 1301 of the central server 1300 is configured to perform the method of Figure 9.

In some embodiments, the central server 1300 may optionally comprise a communications interface 1302. The communications interface 1302 of the central server 1300 can be for use in communicating with other nodes, such as other virtual nodes. For example, the communications interface 1302 of the central server 1300 can be configured to transmit to and/or receive from other nodes requests, resources, information, data, signals, or similar. The processing circuitry 1301 of central server 1300 may be configured to control the communications interface 1302 of the central server 1300 to transmit to and/or receive from other nodes requests, resources, information, data, signals, or similar. The communications interface 1302 can use any suitable communication technology.

Optionally, the central server 1300 may comprise a memory 1303. In some embodiments, the memory 1303 of the central server 1300 can be configured to store program code that can be executed by the processing circuitry 1301 of the central server 1300 to perform the method described herein in relation to the central server 1300. Alternatively or in addition, the memory 1303 of the central server 1300, can be configured to store any requests, resources, information, data, signals, or similar that are described herein. The processing circuitry 1301 of the central server 1300 may be configured to control the memory 1303 of the central server 1300 to store any requests, resources, information, data, signals, or similar that are described herein. The central server 1300 may be configured operate in the manner described herein in respect of a central server.

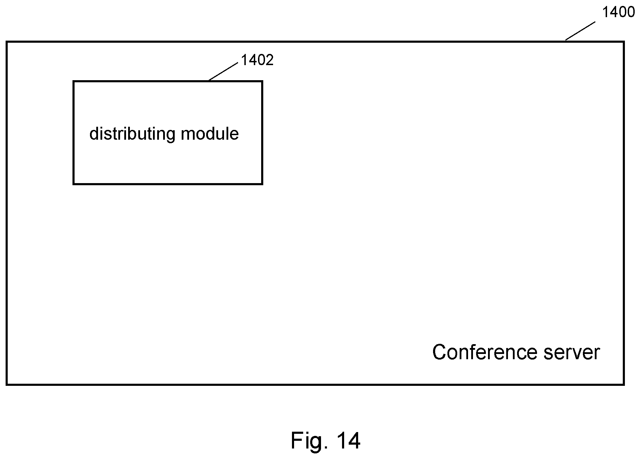

**Figure 14** is a block diagram illustrating a conference server 1400 according to some embodiments. The conference server 1400 comprises a distributing module 1402 configured to distribute published data to one or more entities that are conference participants of the conference according to a Pub/Sub pattern, wherein a conference identifier assigned to the conference is associated with a first class of the published data. The conference server 1400 may operate in the manner described herein in respect of a conference server.

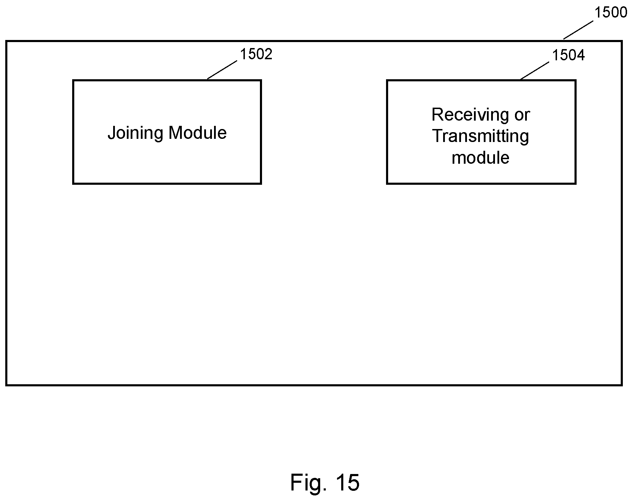

**Figure 15** is a block diagram illustrating an entity 1500 according to some embodiments. The entity 1500 comprises a joining module 1502 configured to join a conference that is managed by a conference server based on an association between a conference identifier assigned to the conference and a first class of published data. The entity 1500 further comprises a receiving or transmitting module 1504 configured to receive or transmit the published data from or to the conference server according to a publish-subscribe, Pub/Sub, pattern. The entity 1500 may operate in the manner described herein in respect of a conference server.

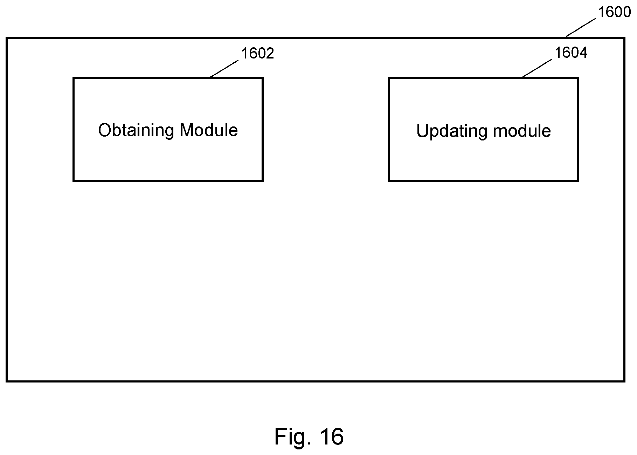

**Figure 16** is a block diagram illustrating a central server 1600 according to some embodiments. The central server 1600 comprises an obtaining module 1602 configured to obtain an indication that a conference identifier for a conference is associated with a first class of published data. The central server 1600 further comprises an updating module 1604 configured to update a database with the conference identifier and the first class. The central server 1600 may operate in the manner described herein in respect of an conference server.

There is provided a computer program product, embodied on a non-transitory machine-readable medium, comprising instructions which are executable by processing circuitry to cause the processing circuitry to perform at least part of the method described herein. There is provided a computer program product comprising a carrier containing instructions for causing processing circuitry to perform at least part of the method described herein. In some embodiments, the carrier can be any one of an electronic signal, an optical signal, an electromagnetic signal, an electrical signal, a radio signal, a microwave signal, or a computer-readable storage medium.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method (400) performed by a conference server (1100, 610, 1400), comprised in a voice over long term evolution, VoLTE, infrastructure, for managing a conference to distribute published data, wherein the VoLTE infrastructure further comprises one or more entities (1200, 620, 810, 1500), and wherein the conference server acts as a publish-subscribe, Pub/Sub, broker, and the method comprising:
distributing (401) the published data to the one or more entities (1200, 620, 810, 1500) that are conference participants (130, 140, 230, 240) of the conference according to a publish-subscribe, Pub/Sub, pattern, wherein a conference identifier assigned to the conference is associated with a first class of the published data.

2. The method (400) as claimed in claim 1 wherein the one or more entities (1200, 620, 810, 1500) have subscribed to receive data of the first class.

3. The method (400) as claimed in claim 1 or 2 wherein the first class of published data comprises a topic of the published data.

4. The method (400) as claimed in any one of claims 1 to 3 wherein the first class of published data comprises an indication of content of the published data.

5. The method (400) as claimed in claim 1 to 4 further comprising:
assigning the conference identifier to the conference.

6. The method (400) as claimed in any one of claims 1 to 5 further comprising:
receiving (602), from a first entity of the one or more entities, a request for information about the conference.

7. The method (400) as claimed in claim 6 further comprising:
sending (603), to the first entity of the one or more entities, the information about the conference.

8. The method (400) as claimed in claim 7 wherein the information comprises the conference identifier and an indication of the first class.

9. The method (400) of claim 8 wherein the information is comprised in an event package.

10. The method (400) as claimed in any one of claims 6 to 9 wherein the request comprises a subscription request to receive information about the conference associated with any of one or more classes of the published data comprising the first class.

11. The method (400) as claimed in claim 10 when dependent on claim 7, wherein the step of sending is performed responsive to creation of the conference.

12. A conference server (1100, 610, 1400) comprised in a voice over long term evolution, VoLTE, infrastructure, for managing a conference to distribute published data, wherein the VoLTE infrastructure further comprises one or more entities (1200, 620, 810, 1500), and wherein, the conference server acts as a publish-subscribe, Pub/Sub, broker, the conference server comprising processing circuitry (1101) configured to cause the conference server to:
distribute published data to one or more entities (1200, 620, 810, 1500) that are conference participants of the conference according to a publish-subscribe, Pub/Sub, pattern, wherein a conference identifier assigned to the conference is associated with a first class of the published data.

13. The conference server (1100, 610, 1400) as claimed in claim 12, wherein the processing circuitry (1101) is further configured to cause the conference server to perform the method as claimed in any of claims 2 to 20.

14. A computer program comprising instructions which, when executed on at least one processor, cause the at least one processor to carry out a method (400) according to any of claims 1 to 11.

15. A computer program product comprising non transitory computer readable media having stored thereon a computer program according to claim 14.

## Patentansprüche

1. Verfahren (400), das durch einen Konferenzserver (1100, 610, 1400) durchgeführt wird, der in einer Voice-over-Long-Term-Evolution-, VoLTE-, Infrastruktur enthalten ist, zum Verwalten einer Konferenz zur Verteilung veröffentlichter Daten, wobei die VoLTE-Infrastruktur ferner eine oder mehrere Einheiten (1200, 620, 810, 1500) umfasst, und wobei der Konferenzserver als Publish/Subscribe-, Pub/Sub-, Broker fungiert, und wobei das Verfahren Folgendes umfasst:
Verteilen (401) der veröffentlichten Daten an die eine oder die mehreren Einheiten (1200, 620, 810, 1500), die Konferenzteilnehmer (130, 140, 230, 240) der Konferenz gemäß einem Publish/Subscribe-, Pub/Sub-, Muster sind, wobei eine der Konferenz zugewiesene Konferenzkennung einer ersten Klasse der veröffentlichen Daten zugeordnet ist.

2. Verfahren (400) nach Anspruch 1, wobei die eine oder die mehreren Einheiten (1200, 620, 810, 1500) abonniert haben, um Daten der ersten Klasse zu empfangen.

3. Verfahren (400) nach Anspruch 1 oder 2, wobei die erste Klasse veröffentlichter Daten ein Thema der veröffentlichten Daten umfasst.

4. Verfahren (400) nach einem der Ansprüche 1 bis 3, wobei die erste Klasse veröffentlichter Daten eine Inhaltsangabe der veröffentlichten Daten umfasst.

5. Verfahren (400) nach Anspruch 1 bis 4, ferner umfassend:
Zuweisen der Konferenzkennung für die Konferenz.

6. Verfahren (400) nach einem der Ansprüche 1 bis 5, ferner umfassend:
Empfangen (602) einer Anforderung für Informationen über die Konferenz von der ersten Einheit der einen oder der mehreren Einheiten.

7. Verfahren (400) nach Anspruch 6, ferner umfassend:
Senden (603) der Informationen über die Konferenz an die erste Einheit der einen oder der mehreren Einheiten.

8. Verfahren (400) nach Anspruch 7, wobei die Informationen die Konferenzkennung und eine Angabe der ersten Klasse umfassen.

9. Verfahren (400) nach Anspruch 8, wobei die Informationen in einem Veranstaltungspaket enthalten sind.

10. Verfahren (400) nach einem der Ansprüche 6 bis 9, wobei die Anforderung eine Abonnementanforderung umfasst, um Informationen über die Konferenz, die einer beliebigen von einer oder mehreren Klassen der veröffentlichen Daten, umfassend die erste Klasse, zugeordnet sind.

11. Verfahren (400) nach Anspruch 10 in Abhängigkeit von Anspruch 7, wobei der Sendeschritt als Reaktion auf die Gründung der Konferenz durchgeführt wird.

12. Konferenzserver (1100, 610, 1400), der in einer Voice-over-Long-Term-Evolution-, VoLTE-, Infrastruktur enthalten ist, zum Verwalten einer Konferenz zur Verteilung veröffentlichter Daten, wobei die VoLTE-Infrastruktur ferner eine oder mehrere Einheiten (1200, 620, 810, 1500) umfasst, und wobei der Konferenzserver als Publish/Subscribe-, Pub/Sub-, Broker fungiert, wobei der Konferenzserver eine Verarbeitungsschaltung (1101) umfasst, die dazu konfiguriert ist, zu bewirken, dass der Konferenzserver:
veröffentlichte Daten an eine oder mehrere Einheiten (1200, 620, 810, 1500) verteilt, die Konferenzteilnehmer der Konferenz gemäß einem Publish/Subscribe-, Pub/Sub-, Muster sind, wobei eine der Konferenz zugewiesene Konferenzkennung einer ersten Klasse der veröffentlichen Daten zugeordnet ist.

13. Konferenzserver (1100, 610, 1400) nach Anspruch 12, wobei die Verarbeitungsschaltung (1101) ferner dazu konfiguriert ist, zu bewirken, dass der Konferenzserver das Verfahren nach einem der Ansprüche 2 bis 20 durchführt.

14. Computerprogramm, umfassend Anweisungen, welche bei Ausführung auf mindestens einem Prozessor bewirken, dass der mindestens eine Prozessor ein Verfahren (400) nach einem der Ansprüche 1 bis 11 durchführt.

15. Computerprogrammprodukt, umfassend nichttransitorische, computerlesbare Medien, die ein darauf gespeichertes Computerprogramm nach Anspruch 14 aufweisen.

## Revendications

1. Procédé (400) exécuté par un serveur de conférence (1100, 610, 1400), compris dans une infrastructure de voix sur évolution à long terme (VoLTE), pour gérer une conférence afin de distribuer des données publiées, dans lequel l'infrastructure VoLTE comprend en outre au moins une entité (1200, 620, 810, 1500), et dans lequel le serveur de conférence agit comme un courtier de publication-abonnement (Pub/Sub), et le procédé comprenant l'étape consistant à :
distribuer (401) les données publiées à ladite au moins une entité (1200, 620, 810, 1500) qui est un participant à la conférence (130, 140, 230, 240) selon un modèle de publication-abonnement (Pub/Sub), dans lequel un identifiant de conférence attribué à la conférence est associé à une première classe des données publiées.

2. Procédé (400) selon la revendication 1, dans lequel ladite au moins une entité (1200, 620, 810, 1500) a souscrit un abonnement pour recevoir des données de la première classe.

3. Procédé (400) selon la revendication 1 ou 2, dans lequel la première classe de données publiées comprend une rubrique des données publiées.

4. Procédé (400) selon l'une quelconque des revendications 1 à 3, dans lequel la première classe de données publiées comprend une indication du contenu des données publiées.

5. Procédé (400) selon l'une quelconque des revendications 1 à 4, comprenant en outre l'étape consistant à : attribuer l'identifiant de conférence à la conférence.

6. Procédé (400) selon l'une quelconque des revendications 1 à 5, comprenant en outre l'étape consistant à : recevoir (602), en provenance d'une première entité de ladite au moins une entité, une demande d'informations concernant la conférence.

7. Procédé (400) selon la revendication 6, comprenant en outre l'étape consistant à :
envoyer (603), à la première entité de ladite au moins une entité, les informations concernant la conférence.

8. Procédé (400) selon la revendication 7, dans lequel les informations comprennent l'identifiant de conférence et une indication de la première classe.

9. Procédé (400) selon la revendication 8, dans lequel les informations sont comprises dans un paquet d'événements.

10. Procédé (400) selon l'une quelconque des revendications 6 à 9, dans lequel la demande comprend une demande d'abonnement pour recevoir des informations concernant la conférence associées à une quelconque classe parmi au moins une classe des données publiées comprenant la première classe.

11. Procédé (400) selon la revendication 10 lorsqu'elle dépend de la revendication 7, dans lequel l'étape consistant à envoyer est exécutée en réponse à la création de la conférence.

12. Serveur de conférence (1100, 610, 1400) compris dans une infrastructure de voix sur évolution à long terme (VoLTE), pour gérer une conférence afin de distribuer des données publiées, dans lequel l'infrastructure VoLTE comprend en outre au moins une entité (1200, 620, 810, 1500), et dans lequel le serveur de conférence agit comme un courtier de publication-abonnement (Pub/Sub), le serveur de conférence comprenant un circuit de traitement (1101) configuré pour amener le serveur de conférence à :
distribuer des données publiées à au moins une entité (1200, 620, 810, 1500) qui est un participant à la conférence selon un modèle de publication-abonnement (Pub/Sub), dans lequel un identifiant de conférence attribué à la conférence est associé à une première classe des données publiées.

13. Serveur de conférence (1100, 610, 1400) selon la revendication 12, dans lequel le circuit de traitement (1101) est en outre configuré pour amener le serveur de conférence à exécuter le procédé selon l'une quelconque des revendications 2 à 20.

14. Programme informatique comprenant des instructions qui, lorsqu'elles sont exécutées sur au moins un processeur, amènent ledit au moins un processeur à réaliser un procédé (400) selon l'une quelconque des revendications 1 à 11.

15. Produit de programme informatique comprenant un support d'enregistrement non transitoire lisible par ordinateur sur lequel est stocké un programme informatique selon la revendication 14.
